Europäisches Patentamt

European Patent Office

Office européen des brevets

(11) Veröffentlichungsnummer: **0 508 302 A2**

## EUROPÄISCHE PATENTANMELDUNG

(21) Anmeldenummer: **92105652.9**

(51) Int. Cl.⁵: **G11B 19/02**

(22) Anmeldetag: **02.04.92**

(30) Priorität: **12.04.91 DE 9104433 U**
**31.10.91 DE 9113596 U**

(43) Veröffentlichungstag der Anmeldung:
**14.10.92 Patentblatt 92/42**

(84) Benannte Vertragsstaaten:
**AT BE CH DE DK ES FR GB GR IT LI LU MC NL PT SE**

(71) Anmelder: **Neuen, Willi Walter**
**Sophienstrasse 13**
**W-6800 Mannheim 1(DE)**

(72) Erfinder: **Selb, Michael**
**Leibnizstrasse 25**
**W-6800 Mannheim 1(DE)**
Erfinder: **Neuen, Dirk**
**Sophienstrasse 13**
**W-6800 Mannheim 1(de)**

(74) Vertreter: **Ratzel, Gerhard, Dr.**
**Seckenheimer Strasse 36a**
**W-6800 Mannheim 1(DE)**

(54) **Laser-Disc-Abspielsystem.**

(57) Es wird ein Laser-Disc-Abspielsystem vorgeschlagen, das aus einer Recheneinheit 1, einem Laser-Disc-Abspielgerät 2, einer Steuerschnittstelle 3, einem Steuerprogramm 4 und einer die Programm-oder Spielinformation tragenden Laser-Disc 5 besteht.

Fig. 1

EP 0 508 302 A2

Bei vorliegender Erfindung handelt es sich um eine Kombination von einem Computer und einem sogenannten Laser Disc Abspielgerät, das im Zusammenhang mit einer Software (Spiel- oder Arbeitsprogramm) beinhaltenden Laser Disc bestückt wird, während der Computer gesteuert von einer Steuersoftware den Ablauf manipuliert. Ein Steuerinterface ist dazu geeignet, Daten bzw. elektrische Impulse von Steckern über das Kabel zum parallelen Port und umgekehrt zu übertragen.

Der Computer ist mittels des Interfaces und der dazugehörigen Steuersoftware in der Lage, Bild- und Dateninformationen von einem Laser Disc Abspielgerät mit internen Daten und Steuerimpulsen zu steuern und kann diese gemeinsam auf einem Computermonitor oder normalem Fernseher darstellen. Dies bedeutet, daß der Computerprozessor von langwierigen Grafikberechnungen entlastet und nur zur Ansteuerung des Abspielgerätes benutzt wird. Die für das Spiel benötigten Grafikinformationen werden direkt der Platte (Laserdisc) entnommen und vom Abspielgerät auf den Monitor gebracht. Die Grafikinformationen werden hierbei vorher auf ein spezielles Speichermedium "Laser Disc" aufgebracht. Diese Laser Disc faßt bis zu 40 Gigabit Daten pro Seite oder mehr. Eine normale Diskette faßt bis zu 40 Megabit Daten auf zwei Seiten. Das bedeutet, daß auf dem hier verwendeten Speichermedium Laser-Disc ca. die 1000fache Speicherkapazität für Spiele zur Verfügung steht.

Dieses Procedere bedeutet, daß ein noch nie gesehener Realismus im Spielebereich ohne Rücksicht auf die begrenzten, von Computersystem zu Computersystem unterschiedlichen Rechenleistungen, erreicht wird.

Für den Anwender bedeutet dieses, daß er ein von seinem Computersystem unabhängiges System erwirbt, welches ihm eine Grafikauflösung und Spielmotivation bietet, welche bislang nur auf immens teuren Hochleistungsrechnern vorstellbar waren. Das Interface ist unabhängig vom auf der Laser Disc befindlichen Programm.

Bei der Steuersoftware handelt es sich um in Assembler programmierte Routinen, welche aufgrund äußerer Impulse (Joystick, Maus Tastatur) Steuerbefehle an die parallele Schnittstelle eines beliebigen Computers sendet. Diese Steuersoftware ist für alle auf dem 68 000 und aufwärts basierenden Computersysteme (z.B. Commodore Amiga, Atari ST, IBM und Kompatible) geeignet. Die angesteuerten Schnittstellen sind bei allen Computersystemen identisch.

Das der Erfindung zugrundeliegende Steuerinterface besteht aus drei verschiedenen Teilen. Diese sind ein handelsübliches als RS 232 oder auch als parallele Schnittstellenstecker bezeichnetes Bauteil, ein handelsübliches als Dipolklinkenstecker bezeichnetes Bauteil und ein handelsübliches,

zweiadriges, abgeschirmtes Kabel.

Die zuvor beschriebenen Einzelteile bilden in Verbindung mit einem beliebigen Computersystem und mit einem handelsüblichen Laser Disc Player eine Funktionseinheit.

Der Anwender verbindet die parallele Schnittstelle seines Computers via dem Kabel und dem Klinkenstecker, mit der sogenannten Input (Remote Control) Buchse seines Laser Disc Players.

Nach Anschalten des Computers wird die Steuersoftware geladen. Alsdann ist der Laser-Disc-Player einzuschalten und die Laser Disc mit dem eigentlichen Spiel einzulegen. Entsprechend der jeweils präsenten Ebene erfolgt die Aufforderung, ein beliebiges Eingabegerät (Tastatur, Maus, Joystick) zu betätigen, wodurch das Spiel gestartet wird. Während des Spiels hat der Anwender die Möglichkeit den von der Laser Disc geladenen Spielablauf durch sein Eingabegerät (Joystick etc.) zu beeinflussen.

Die Grafikinformation (von der Laser Disc) verändern sich je nach Betätigen des Eingabegerätes. Die Steuersoftware erkennt die Bewegungen des Eingabegerätes und gibt ihrerseits Steuerimpulse mittels des Interfaces an den Laser Disc Player weiter. Dieser sucht in Abhängigkeit des Spielverlaufs nach der nächsten programmtechnisch vorgesehenen Grafiksequenz und stellt diese auf dem Computermonitor dar. Gleichfalls gibt es die Möglichkeit, daß das Steuerprogramm erkennt, an welcher Stelle (welcher Grafiksequenz) sich der Laserstrahl gerade befindet. Es handelt sich hierbei dann um ein interaktives Zusammenwirken aller Komponenten.

Das erfindungsgemäße System ermöglicht es, dem Anwender von Laser Disc Playern auf Laser Discs befindliche Spiele in Verbindung mit dem Computersystem zu nutzen. Dieser Nutzen war bisher nicht gegeben.

Desweiteren ermöglicht das erfindungsgemäße System die Benutzung von Anwenderprogrammen (professioneller Bereich) mittels zugrundeliegender Steuersoftware auf einem beliebigen Computersystem.

Dies war bislang nur auf teuren Spezialgeräten möglich, welche nur für das Abspielen von Daten auf CD-ROM gespeicherten Daten geeignet sind.

Im Gegensatz zu herkömmlichen CD-ROM-Systemen kann das erfindungsgemäße System computerunabhängig genutzt werden. CD-ROM Systeme aus der professionellen EDV Technik arbeiten nur mit einem speziellen Computersystem (z.B. IBM Kompatible) zusammen, und bieten keine weiteren Nutzmöglichkeiten.

Bei den verwendeten Laser Discs handelt es sich um ein Speichermedium für digitale akustische und audiovisuelle Daten. Dieses Medium ist in der Lage bis zu 40 Gigabit pro Seite aufzunehmen. Ein normaler, auf normaler, magnetischer Basis funktionierender Datenspeicher, wie z.B. Disketten, sind nur in der Lage 40 Megabit Daten zu speichern. Die Laser Disc basiert auf einem laseroptischen Prinzip. Das heißt, sie funktioniert wie eine Audiocompactdisc (12 cm φ) auf welcher winzige "Löcher" aufgebracht sind, welche von einem Laser optisch abgetastet werden können. Im Gegensatz zu Audiocompactdiscs, haben die Laserdiscs einen Durchmesser von 30 cm. Auf den hier verwendeten Laser Discs sind Computerspiele abgespeichert, welche von einem Laser Disc Player wieder abgespielt werden können. Dieses Abspielen allein hat keinerlei Funktion.

Unter einem Laser Disc Player versteht man ein handelsübliches Gerät, welches dazu geeignet ist Audiocompactdiscs, Laserdiscs, Spielfilme, CD-Videos (12 cm φ) abzuspielen.

Das Steuerinterface ist dazu geeignet, Daten bzw. elektrische Impulse von dem Stecker über das Kabel zum Spielen und eventuell umgekehrt zu übertragen.

Die Laser Disc selbst gilt als digitales Tonspeichermedium. Der Laser Disc Player wiederum als solches, ist nur zum Abspielen von Audio-CD's, CD-Videos und Laserdiscs geeignet. Als Datenspeicher für Computer ist dieser von Natur aus bisher als handelsübliches Gerät nicht geeignet.

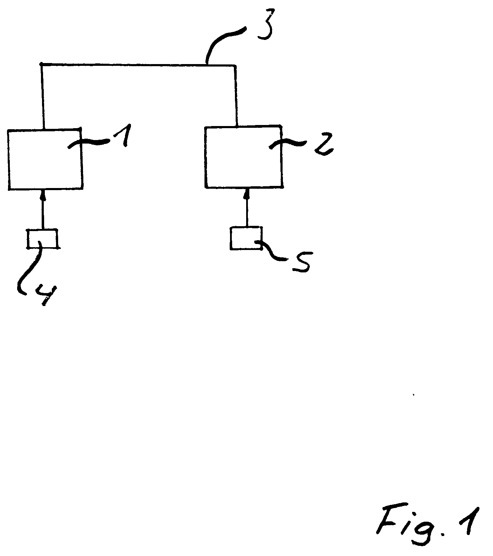

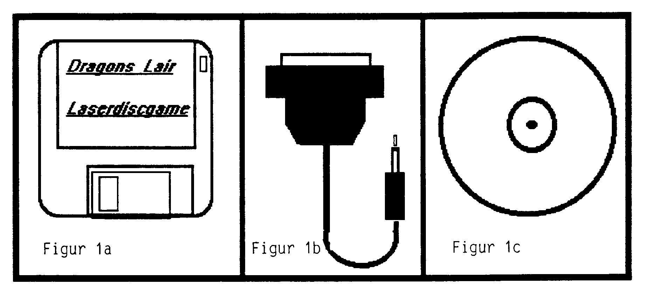

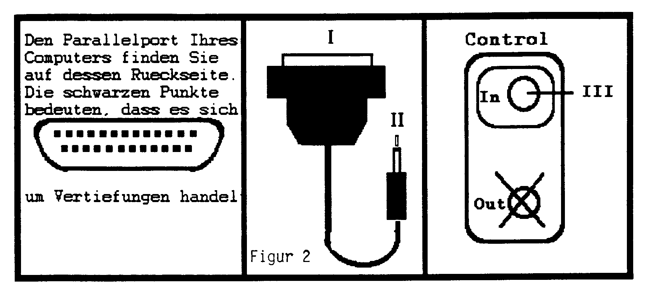

Anhand den Figuren 1, 1a, 1b, 1c, 2 wird eine Ausführungsform der Erfindung nunmehr beschrieben.

Mit den Bezugszeichen 1 ist der Computer gekennzeichnet. Mit dem Bezugszeichen 2 der zu verwendende Laser-Disc-Player. Beide werden mittels des Steuerinterfaces 3 verbunden. Mit dem Bezugszeichen 4 ist der Datenträger (Diskette) für die Steuersoftware gekennzeichnet, während die Laser-Disc das Bezugszeichen 5 trägt.

Die Abbildung 1a zeigt die Steuersoftware. Die Abbildung 1b das Steuerinterface mit paralleler Schnittstelle und die Figur 1c die Laser-Disc. Nun ist der mit I bezeichnete Teil des Interfaces (Figur 2) in den Parallelport des Rechners einzustecken. Anschließend wird der mit II bezeichnete Teil des Interfaces mit der als III bezeichneten "Control-in"-Buchse des Laser-Disc-Players (auch remote-control genannt) gesteckt. Jetzt sind beide Geräte einzuschalten und die Discs/Disketten einzuführen.

Im folgenden wird eine bevorzugte Ausführungsform der Erfindung beschrieben.

Das Abrufen von auf einer Laser-Disc gespeicherten Bild- und Toninformationen mit Hilfe eines Laser-Disc-Abspielgerätes wird hier durch einen Computer mit einer Schnittstelle und entsprechender Steuersoftware gesteuert, wobei die Bildinformationen auf einem Computermonitor dargestellt werden und die Toninformationen durch geeignete Mittel in Schall umgesetzt werden. Der Computerprozessor wird in diesem System von einer langwierigen Grafikberechnung entlastet, an deren Stelle die Ansteuerung des Laser-Disc-Abspielgerätes tritt. Die Daten bzw. elektrischen Impulse werden hier über Stecker und Kabelverbindungen zwischen dem Computer und dem Laser-Disc-Abspielgerät übertragen. Dazu wird der Computer über das Interface, parallele Schnittstellen, durch ein mit entsprechenden Steckern ausgerüstetes Kabel mit Steueranschlüssen des Laser-Disc-Abspielgerätes verbunden. Dies setzt voraus, daß das Laser-Disc-Abspielgerät solche Steueranschlüsse für einen Computer aufweist, was nur für einige wenige auf dem Markt befindliche Laser-Disc-Abspielgeräte zutrifft. Eine Laser-Disc ist zwar ein digitales Tonspeichermedium, wird aber bislang in Verbindung mit einem Laser-Disc-Abspielgerät nur zum Abspielen von Audio-CD's, CD-Videos und Laserdiscs benutzt, nicht aber als Datenspeicher für Computer, so daß die handelsüblichen Abspielgeräte auch nicht mit einem Anschluß für einen Computer ausgestattet sind.

Fast alle handelsüblichen Laser-Disc-Abspielgeräte weisen hingegen Fernbedienungsempfänger auf, die auf Infrarotbasis arbeiten.

Mit der vorliegenden Erfindung wurden Verbindungsmittel zwischen einer Recheneinheit bzw. einem Computer und einem Laser-Disc-Abspielgerät für ein Laser-Disc-Abspielsystem geschaffen, die für möglichst viele verschiedene handelsübliche Laser-Disc-Abspielgeräte verwendbar sind.

Erfindungsgemäß wird dazu vorgeschlagen, die Steuerschnittstelle der Recheneinheit als Infrarotsteuerschnittstelle auszubilden und die Verbindung zwischen der Recheneinheit und einem Laser-Disc-Abspielgerät mit einem auf Infrarotbasis arbeitenden Fernbedienungsempfänger über die Infrarotsteuerschnittstelle und den Fernbedienungsempfänger herzustellen.

Besonders vorteilhaft ist, daß mit dieser Realisierung der Schnittstelle eine drahtlose Steuerung eines oder auch mehrerer Laser-Disc-Abspielgeräte durch eine Recheneinheit möglich ist. Die vorliegende Erfindung ermöglicht es, Computer und Laser-Disc-Abspielgerät eines Laser-Disc-Abspielsystems auch räumlich getrennt voneinander aufzustellen, ohne daß störende, aufwendige Kabelverbindungen erforderlich sind. Von Vorteil ist auch, daß die Ausnutzung des weitgehend standardmäßig eingebauten Fernbedienungsempfängers des Laser-Disc-Abspielgerätes zur Datenübertragung zwischen Computer und Abspielgerät keine Sonderausführung bzw. -ausstattung des Abspielgerätes erfordert.

Durch die in den Unteransprüchen vorgeschlagenen Maßnahmen sind vorteilhafte Weiterbildungen des im Hauptanspruch beschriebenen Laser-Disc-Abspielsystems möglich.

Die Steuerimpulse werden mit einer Trägerfrequenz moduliert, um Fremdlichteinflüsse bei der Infrarotübertragung zu vermeiden. Mit Hilfe eines Wandlers lassen sich Steuerimpulse, die beispielsweise in einer ersten bestimmten Norm, wie der V 24-Norm, vorliegen, in eine zweite bestimmte Norm umwandeln, z.B. in die TTL-Norm (Transistor-Teil-Logik). Entsprechend einer besonders vorteilhaften Ausführungsform der Erfindung weist das Laser-Disc-Abspielsystem Mittel auf, zum Variieren der Trägerfrequenz, beispielsweise zur Anpassung an die Fernbedienungsempfänger verschiedener Laser-Disc-Abspielgeräte. Die Infrarot-Steuerschnittstelle ist mit lichtemittierenden Dioden (LED) ausgestattet. Da eine Steuerschnittstelle eines Laser-Disc-Abspielsystems viel mehr und häufiger Daten an das Laser-Disc-Abspielgerät übermitteln muß, als eine "normale" Fernbedienung und die Spitzenströme der lichtemittierenden Dioden der sicheren Übertragung wegen recht hoch gewählt werden müssen, ist es vorteilhaft, anstelle einer Batterieversorgung ein stabilisiertes Netzteil zu verwenden.

Ein Ausführungsbeispiel dieser bevorzugten Ausführungsformen ist in den Zeichnungen 3 bis 5 dargestellt und in der nachfolgenden Beschreibung näher erläutert.

Es zeigen:

Figur 3    ein Schema eines Laser-Disc-Abspielsystems

Figur 4    das Schaltbild eines stabilisierten Netzteils und

Figur 5    das Schaltbild einer Steuerschnittstelle mit einem Wandler, Modulationsschaltung und die lichtemittierenden Dioden.

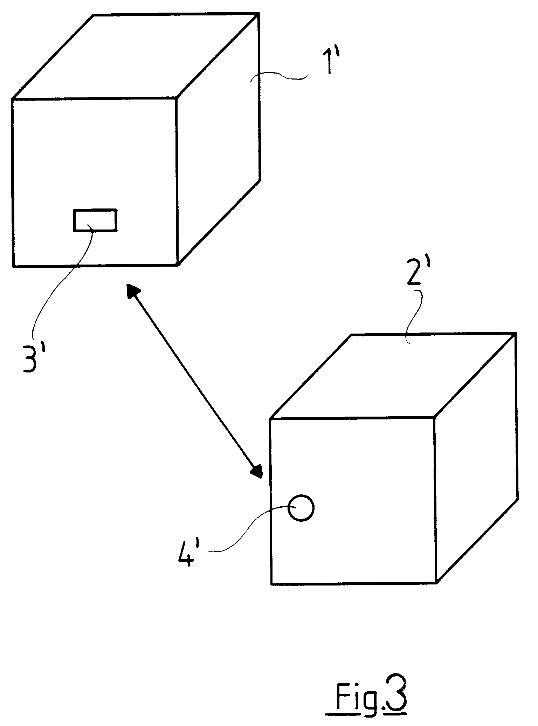

In Figur 3 ist schematisch die Anordnung eines Laser-Disc-Abspielsystems dargestellt. Mit 1' ist eine Recheneinheit bezeichnet, die eine Infrarot-Steuerschnittstelle 3' aufweist. Es ist ferner ein Laser-Disc-Abspielgerät 2' vorhanden mit einem auf Infrarotbasis arbeitenden Fernbedienungsempfänger 4'. Die Dateninformationsübertragung zwischen der Recheneinheit 1'und dem Laser-Disc-Abspielgerät 2' erfolgt drahtlos auf Infrarotbasis über die Infrarotsteuerschnittstelle 3' und den Fernbedienungsempfänger 4', was durch den Pfeil angedeutet ist. Aufgrund dieser Datenübertragungsform ist es auch möglich, mit einer Recheneinheit und einer Infrarot-Schnittstelle mehrere Laser-Disc-Abspielgeräte, wie z.B. einen Bildplattenspieler und einen CD-Player, zu steuern.

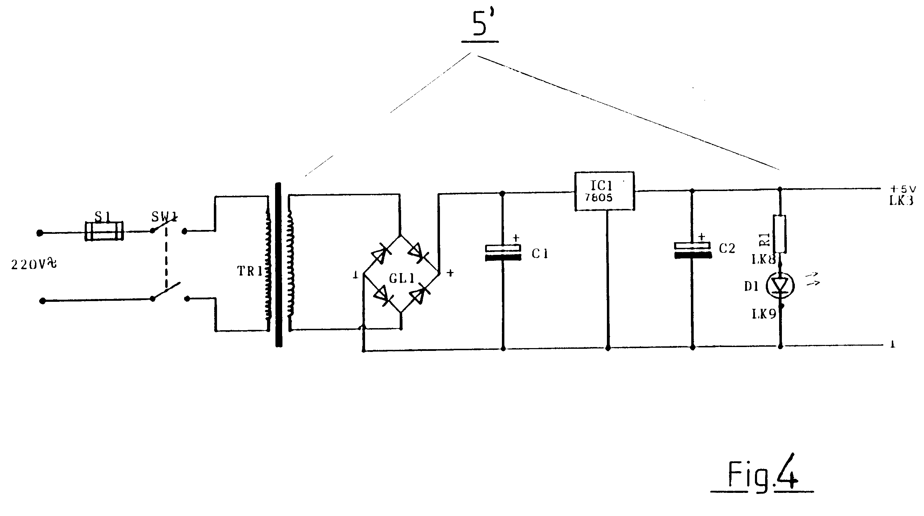

Figur 4 stellt das Schaltbild eines stabilisierten Netzteils 5' dar, das beispielhaft in Verbindung mit den lichtemittierenden Dioden einer Infrarotsteuerschnittstelle verwendet werden kann. Die mit den Bezugszeichen bezeichneten Bauelemente und deren Betriebsparameter sind im Anschluß an die Figurenbeschreibung aufgelistet. Eine sichere Übertragung von Daten über die Infrarotsteuerschnittstelle erfordert ein Betreiben der lichtemittierenden Dioden mit erhöhtem Strom. Außerdem wird die erfindungsgemäße Steuerschnittstelle in Verbindung mit einem Laser-Disc-Abspielsystem wesentlich häufiger Daten übertragen, als dies normalerweise bei manueller Fernbedienung erfolgt. Aus diesem Grunde ist ein stabilisiertes Netzteil zur Stromversorgung der Steuerschnittstelle einer Batterieversorgung vorzuziehen.

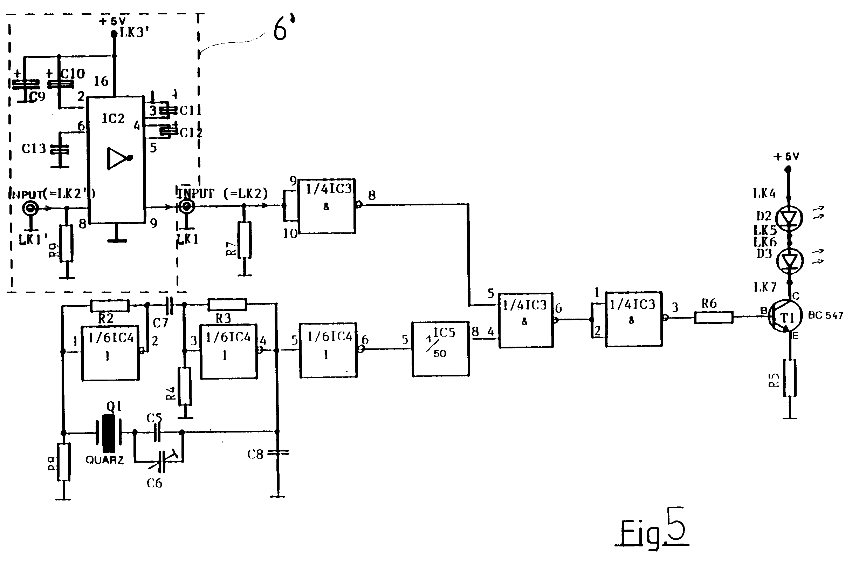

In Figur 5 ist mit 6' eine Wandlerschaltung bezeichnet, mit der ein Steuerimpulssignal in V 24-Norm, wie sie standartmäßig bei Computerschnittstellen Verwendung findet, in ein Steuerimpulssignal in TTL-Norm umgewandelt wird.

Mit dem als IC3 bezeichneten NAND-Schmitt-Trigger werden die vom Computer gelieferten Anstiegsflanken verbessert. Dieses Schaltelement führt ferner verschiedene notwendige Invertierungen des Signals durch. Der IC3 dient außerdem dazu, das mit einem Inverter IC4 generierte 2 MHz-Signal und mit einem variablem Frequenzteiler IC5 geteilte Signal mit dem Steuersignal zu modulieren. Diese Technik wird zur Vermeidung von Fremdlichteinflüssen bei der Infrarotübertragung angewandt. Der Transistor T1 verstärkt den Ansteuerstrom für die beiden infrarotlichtemittierenden Dioden D2 und D3. Auch die übrigen in dieser Schaltung dargestellten und bezeichneten Schaltelemente sind in der Auflistung am Ende der Figurenbeschreibung näher spezifiziert.

Im Rahmen der Erfindung liegen jedoch nicht nur Realisierungen entsprechend dem in den Figuren 4 und 5 dargestellen Schaltungsprinzip, sondern auch solche Ausgestaltungen, deren Funktionsprinzip dem des in den Ansprüchen beschriebenen Erfindungsgegenstandes entspricht.

Auflistung der Schaltungselemente

Bermerkung:    Mit einem * gegennzeichnete Bauelemente werden nur für die V24/TTL- Schnittstelle benötigt!

1.) Widerstände 1/4 W, Kohleschicht 5% Toleranz

R1 = 62 Ohm

R2 = 2K2 Ohm

R3 = 2K2 Ohm

R4 = 1K5 Ohm

R5 = 27 Ohm

R6 = 1K0 Ohm

R7 = 10K0 Ohm

R8 = 1K5 Ohm

R9 = 10K0 Ohm*

2.) Kondensatoren

C1 = 470μF, 16V Elektrolytkondensator liegend

C2 = 10 μF, 16V Elektrolytkondensator stehend

C3 = 22nF, 60V MKL oder keramisch RM 5mm

C4 = 22nF, 60V MKL oder keramisch RM 5mm

C5 = 100pF, 100V keramisch RM 5mm

C6 = 5-25pF Trimmkondensator

C7 = 10 nF, 60V MKL oder keramisch RM 5mm

C8 = 680 pF, 100V keramisch RM 5mm

C9 = 10μF, 16V Minielektrolytkondensator stehend *

C10 = 10μF, 16V Minielektrolytkondensator stehend *

C11 = 10μF, 16V Minielektrolytkondensator stehend*

C12 = 10μF, 16V Minielektrolytkondensator stehend*

C13 = 10μF, 16V Minielektrolytkondensator stehend*

C14 = 22nF, 60V MKL oder keramisch RM 5mm

3.) Halbleiter

IC1 = 7805 Spannungsregler +5v

IC2 = MAX 232 V24/TTL-Wandler *

IC3 = 74LS132 NAND-Schmitt-Trigger

IC4 = 7404 Inverter

IC5 = 74LS56 Frequenzteiler variabel (:50 max.)

T1 = BC 547B NPN-Transistor

GL1 = B20 C500 Gleichrichter, Rundgehäuse

D1 = LED 5mm, rot,klar

D2 = CQY 99 Infrarotdiode 5mm (normales LED-Gehäuse)

D3 = CQY 99 Infrarotdiode 5mm (normales LED-Gehäuse)

4.) Sonstiges

TR1 = Transformator 6V, 0,15VA min.

SW1 = Netzschalter Shadow 2xum

S1 = Sicherung 100mA mittelträge und zwei Halter für Platinenmontage

K1 = Schraubkontakt 2pol.

BU1 = Klinkenbuchse 3,2mm φ für Printmontage bzw. BU1A

Q1 = Quarz 2MHz

LK1, LK1', LK2, LK2', LK3, LK3' = Lötstift *

LK4, LK5, LK6, LK7, LK8, LK9 = Lötstift für Dioden D1-D3

**Patentansprüche**

1.  Laser-Disc-Abspielsystem,
    dadurch gekennzeichnet,
    daß dieses aus einer Recheneinheit (1), einem Laser-Disc-Abspielgerät (2), einer Steuerschnittstelle (3), einem Steuerprogramm (4) und einer die Programm- oder Spielinformation tragenden Laser-Disc (5) besteht.

2.  Laser-Disc-Abspielsystem nach Anspruch 1,
    dadurch gekennzeichnet,
    daß mittels der Steuerschnittstelle (3) eine Verbindung zwischen Recheneinheit (1) und Laser-Disc-Abspielgerät (2) vorliegt.

3.  Laser-Disc-Abspielsystem nach Anspruch 1 und 2,
    dadurch gekennzeichnet,
    daß die Spielinformation innerhalb der internen Recheneinheit des Laser-Disc-Abspielgeräts verarbeitbar ist.

4.  Laser-Disc-Abspielsystem nach Anspruch 2,
    dadurch gekennzeichnet,
    daß die Steuerschnittstelle als Infrarot-Steuerschnittstelle (3') ausgebildet ist,
    daß das mindestens eine Laser-Disc-Abspielgerät (2') einen auf Infrarotbasis arbeitenden Fernbedienungsempfänger (4') aufweist und
    daß die Verbindung zwischen der Recheneinheit (1') und dem mindestens einen Laser-Disc-Abspielgerät (2') über die Infrarot-Steuerschnittstelle (3') und den mindestens einen Fernbedienungsempfänger (4') herstellbar ist.

5.  Laser-Disc-Abspielsystem nach Anspruch 4,
    dadurch gekennzeichnet,
    daß von der Recheneinheit (1') mit der Infrarot-Steuerschnittstelle (3')Steuerimpulse generierbar und mit einer Trägerfrequenz modulierbar sind.

6.  Laser-Disc-Abspielsystem nach Anspruch 5,
    dadurch gekennzeichnet,
    daß ein Wandler (6') vorhanden ist zur Generierung von Steuerimpulsen einer bestimmten Norm.

7.  Laser-Disc-Absielsytem nach Anspruch 5 bis 6,
    dadurch gekennzeichnet,
    daß Mittel vorhanden sind zum Variieren der Trägerfrequenz zur Anpassung an den Fernbedienungsempfänger (4') des Laser-Disc-Abspielgerätes (2').

8.  Laser-Disc-Abspielsystem nach Anspruch 4 - 7,
    dadurch gekennzeichnet,
    daß die Infrarot-Steuerschnittstelle (3') mindestens eine lichtemittierende Diode (LED) aufweist.

9.  Laser-Disc-Abspielsystem nach Anspruch 8,
    dadurch gekennzeichnet,
    daß der mindestens einen lichtemittierenden Diode (LED) ein eigenes stabilisiertes Netzteil (5') zugeordnet ist.

Fig. 1

Figur 1a    Figur 1b    Figur 1c

Den Parallelport Ihres Computers finden Sie auf dessen Rueckseite. Die schwarzen Punkte bedeuten, dass es sich

um Vertiefungen handel

I

II

Figur 2

Control

In III

Out

Fig.3

Fig.4

Fig.5